**Europäisches Patentamt**

**European Patent Office**

**Office européen des brevets**

(19)

(11) **EP 1 550 983 A1**

(12) **EUROPÄISCHE PATENTANMELDUNG**

(43) Veröffentlichungstag:
06.07.2005 Patentblatt 2005/27

(51) Int Cl.⁷: **G06T 7/00**, B60Q 1/48

(21) Anmeldenummer: 04105591.4

(22) Anmeldetag: 08.11.2004

(84) Benannte Vertragsstaaten:
**AT BE BG CH CY CZ DE DK EE ES FI FR GB GR
HU IE IS IT LI LU MC NL PL PT RO SE SI SK TR**
Benannte Erstreckungsstaaten:
**AL HR LT LV MK YU**

(30) Priorität: **19.12.2003 DE 10360413**

(71) Anmelder: **ROBERT BOSCH GMBH**
**70442 Stuttgart (DE)**

(72) Erfinder:
• **Herrmann, Roland**
**31139 Hildesheim (DE)**
• **Abraham, Steffen**
**31134 Hildesheim (DE)**

(54) **Vorrichtung zur Kalibrierung eines Bildsensorsystems**

(57)     Es wird eine Vorrichtung zur Kalibrierung wenigstens eines Bildsensorsystems vorgeschlagen. Die Vorrichtung ist derart konfiguriert, dass die Vorrichtung das in einem Kraftfahrzeug angeordnete und zumindest einen Teil des rückwärtigen Fahrraumes des Kraftfahrzeuges erfassende Bildsensorsystem kalibriert, wobei die Vorrichtung ferner derart konfiguriert ist, dass die Vorrichtung das Bildsensorsystem mittels eines Kalibrierobjektes in Abhängigkeit von Bildsignalen des Bildsensorsystems und in Abhängigkeit von Signalen wenigstens eines Ultraschallsensors kalibriert. Durch die Vorrichtung wird eine konsistente Entfernungsdarstellung im Videobild des Bildsensorsystems der Rückfahrkamerafunktion zur Entfernungsmessung der auf die Ultraschallsensoren basierenden Ultraschall-Einparkhilfe erreicht.

Fig. 1

**Beschreibung**

**Stand der Technik**

Die Erfindung betrifft eine Vorrichtung zur Kalibrierung wenigstens eines Bildsensorsystems, wobei das Bildsensorsystem in einem Kraftfahrzeug angeordnet ist und zumindest einen Teil des rückwärtigen Fahrraumes des Kraftfahrzeuges erfasst.

Kraftfahrzeughersteller planen den Einsatz von Rückfahrkameras in Kraftfahrzeugen.

Beispielsweise ist aus der WO 00/74976 A1 ein Rückfahrkamerasystem bekannt, die mit einer Weitwinkeloptik ein Videobild von der Situation hinter einem Kraftfahrzeug aufnimmt. Das Videobild wird in einem Display dem Fahrer präsentiert. Zusätzlich wird vorgeschlagen, Hilfslinien in das Videobild einzuzeichnen. Die Hilfslinien dienen zur Visualisierung des Abstandes des Kraftfahrzeuges zu Hindernissen oder Objekten. Ferner zeigen die Hilfslinien in Abhängigkeit vom Lenkradeinschlag einen Fahrschlauch in dem sich das Kraftfahrzeug bei einer Rückwärtsbewegung mit konstantem Lenkwinkeleinschlag bewegen würde. Dieser Vorschlag hat den Vorteil, dass dem Fahrer das Einparken erleichtert wird.

Aus der WO 01/25054 A1 ist eine Einrichtung zur Überwachung der Umgebung eines einparkenden Kraftfahrzeuges bekannt. Neben einer Videokamera wird der Einsatz von seitlich angeordneten Objekterkennungssensoren, beispielsweise Ultraschallsensoren, vorgeschlagen. Die Objekterkennungssensoren decken Bereiche ab, die von der Videokamera nicht erfasst werden.

Die EP 1120746 A2 offenbart ein Verfahren zur Kalibrierung einer Kamera eines Kraftfahrzeuges. Es wird vorgeschlagen, einen bekannten Testkörper in das Blickfeld der Kamera zu bringen. Die für die Bestimmung der Einbauparameter notwendige Positionierung des Kraftfahrzeuges bezüglich des Testkörpers wird durch Verschieben des Testkörpers erreicht.

Vorteile der Erfindung

Die nachfolgend beschriebene Vorrichtung zur Kalibrierung wenigstens eines Bildsensorsystems mit den Merkmalen des unabhängigen Patentanspruchs 1 hat den Vorteil, dass eine exakte Positionierung des Kraftfahrzeuges bezüglich des Kalibrierobjektes nicht erforderlich ist, da eine Positionsmessung des Kraftfahrzeuges gegenüber dem Kalibrierobjekt (Hindernis) durch die Ultraschallsensoren der im Kraftfahrzeug vorhandenen Ultraschall-Einparkhilfe erfolgt. Für eine exakte Positionierung des Kraftfahrzeuges bezüglich eines Kalibrierobjektes sind entweder teure Achsmessstände oder Rollenprüfstände oder Markierungen auf der Fahrbahn erforderlich, um die Lage der Hinterachse festzulegen, oder die Lage des Kalibrierobjektes wird über zusätzliche technische Ausrüstungen in der Fertigung oder in Werkstätten festgelegt. Dies ist mit hohen Kosten verbunden, da beispielsweise die Nutzung von Prüfständen insbesondere in der Fertigung hohe Kosten verursacht. Ferner sind Prüfstände nicht in allen Werkstätten vorhanden. Die exakte Positionierung des Kraftfahrzeuges mittels Markierungen auf der Fahrbahn ist schwierig, da dies vom Geschick des Fahrers abhängt. Auch die Verwendung von zusätzlicher technischer Ausrüstung verursacht hohe Kosten. Vorteilhaft ist ferner, dass die Verwendung eines speziell gestalteten Testfeldes möglich, aber nicht notwendig ist. Zusammenfassend hat die nachfolgend beschriebene Vorrichtung den Vorteil einer exakten, einfachen und zugleich kostengünstigen Kalibrierung eines Bildsensorsystems in der Funktion als Rückfahrkamera in einem Kraftfahrzeug.

Ein weiterer Vorteil der nachfolgend beschriebenen Vorrichtung ist, dass durch die Kalibrierung des Bildsensorsystems in Verbindung mit der Ultraschall-Einparkhilfe gewährleistet ist, dass die Visualisierung von Entfernungen im Videobild und die Ausgabe von Warnung aus der Ultraschall-Einparkhilfe insbesondere bezüglich der Annäherung an Hindernisse konsistent ist. Der Einsatz eines derart kalibrierten Bildsensorsystems in der Funktion als Rückfahrkamera in einem Kraftfahrzeug hat ferner den Vorteil, dass die Entfernungslinien im Videobild konsistent zu Abstandwarnungen aus der Ultraschall-Einparkhilfe sind, unabhängig von Messfehlem der Ultraschall-Einparkhilfe, da die Rückfahrkamera relativ zu der Ultraschall-Einparkhilfe kalibriert ist.

Besonders vorteilhaft ist, dass die nachfolgend beschriebene Vorrichtung derart konfiguriert ist, dass die Vorrichtung das Bildsensorsystem mittels wenigstens einer von wenigstens einem Kalibrierobjekt und einer Fahrbahnebene gebildeten Kante kalibriert, da dies zu einer exakte Kalibrierung beiträgt. Vorteilhaft ist die Messung dieser derart gebildeten Unterkante des Kalibrierobjektes (Hindernis) im Videobild durch Überlagerung von Hilfslinien im Videobild in einer Displaydarstellung in einer Anzeigeeinheit. Der Rechenaufwand ist damit gering und der Einsatz von einfachen Steuergeräten ist möglich.

Vorteilhaft ist, dass das Kalibrierobjekt flächenhaft ausgeführt ist und/oder das Kalibrierobjekt im wesentlichen senkrecht auf der Fahrbahnebene ausgerichtet ist, da keine speziellen Kalibrieraufbauten, wie Testfelder, erforderlich sind. Senkrechte Hindernisse sind im urbanen Umfeld, beispielsweise als Hauswände und/oder Türen und/oder Garagentore und/oder Mauern, verfügbar. Damit ist die Vorrichtung unabhängig von der Ausstattung oder speziellen Ausrüstungen von Werkstätten oder Fertigungsstätten einsetzbar.

Besonders vorteilhaft ist, dass die Vorrichtung derart konfiguriert ist, dass die Vorrichtung das Bildsensorsystem mittels wenigstens einer weiteren Kante des Kalibrierobjektes, insbesondere wenigstens einer im wesentlichen vertikal angeordneten Kante des Kalibrierobjektes, und/oder mittels wenigstens eines Kalibriermerkmals auf dem Kalibrierobjekt kalibriert, da dadurch weitere Kalibrierparameter ermittelbar sind. Insbesondere ist hierdurch eine vollständige Bestimmung der drei Einbauwinkel, also Gierwinkel, Nickwinkel und Wankwinkel, des Bildsensorsystems möglich. Ferner trägt dies zu einer weiteren Erhöhung der Genauigkeit der Kalibrierung bei.

Eine Vorrichtung, die derart konfiguriert ist, dass die Vorrichtung das Bildsensorsystem in Abhängigkeit von Bildsignalen von wenigstens einem Bestandteil des Kraftfahrzeuges, beispielsweise der Stoßstange, kalibriert, hat den Vorteil, dass die Genauigkeit der zu bestimmenden Kalibrierparameter erhöht wird.

Besonders vorteilhaft ist, dass die Vorrichtung wenigstens eine Eingabeeinheit umfasst, wobei die Eingabeeinheit derart ausgestaltet ist, dass eine Kennzeichnung wenigstens einer Kante und/oder wenigstens eines Kalibriermerkmals und/oder wenigstens eines Bestandteils des Kraftfahrzeuges in den Bildsignalen des Bildsensorsystems durchführbar ist. Dies ermöglicht die manuelle Positionierung von Hilfslinien im angezeigten Videobild (Displaybild) beispielsweise mittels Cursor-Tasten, so dass die Hilfslinien mit dem erfassten Videobild, beispielsweise auch eines Testfeldes, zur Deckung kommen. Diese manuell von einem Bediener durchgeführte Messung ist einfach und robust. Alternativ oder zusätzlich ist es vorteilhaft, die Vorrichtung derart zu konfigurieren, dass die Vorrichtung die Kante und/oder wenigstens ein Kalibriermerkmal und/oder wenigstens ein Bestandteil des Kraftfahrzeuges in Abhängigkeit der Bildsignale des Bildsensorsystems ermittelt und das Bildsensorsystem kalibriert. Gleichwohl durch diese automatische Auswertung aufwendige Algorithmen zur Bildverarbeitung erforderlich sind und dies zu einer höheren Rechenleistung im Steuergerät führt, bietet die automatische Auswertung den Vorteil, dass keine Bedienereingaben erforderlich sind.

Weitere Vorteile ergeben sich aus der nachfolgenden Beschreibung von Ausführungsbeispielen mit Bezug auf die Figuren und aus den abhängigen Patentansprüchen.

Zeichnung

Die Erfindung wird nachstehend anhand der in der Zeichnung dargestellten Ausführungsformen näher erläutert.

Es zeigen:

- Figur 1 eine Übersichtszeichnung des bevorzugten Ausführungsbeispiels,
- Figur 2 eine Seitenansicht des bevorzugten Ausführungsbeispiels,
- Figur 3 eine Aufsicht des bevorzugten Ausführungsbeispiels,
- Figur 4 eine Eingabeeinheit der Vorrichtung zur Kalibrierung eines Bildsensorsystems des bevorzugten Ausführungsbeispiels,
- Figur 5 eine Anzeigedarstellung einer Variante des bevorzugten Ausführungsbeispiels.

Beschreibung von Ausführungsbeispielen

Nachfolgend wird eine Vorrichtung zur Kalibrierung wenigstens eines Bildsensorsystems beschrieben. Die Vorrichtung ist derart konfiguriert, dass die Vorrichtung das in einem Kraftfahrzeug angeordnete und zumindest einen Teil des rückwärtigen Fahrraumes des Kraftfahrzeuges erfassende Bildsensorsystem kalibriert, wobei die Vorrichtung ferner derart konfiguriert ist, dass die Vorrichtung das Bildsensorsystem mittels eines Kalibrierobjektes in Abhängigkeit von Bildsignalen des Bildsensorsystems und in Abhängigkeit von Signalen wenigstens eines Ultraschallsensors kalibriert. Durch die Vorrichtung wird eine konsistente Entfernungsdarstellung im Videobild des Bildsensorsystems der Rückfahrkamerafunktion zur Entfernungsmessung der auf die Ultraschallsensoren basierenden Ultraschall-Einparkhilfe erreicht.

Die nachfolgend beschriebene Ultraschall-Sensorik (US-Sensorik) ist als Einparkhilfe ausgeführt. Die Ultraschall-Sensoren dienen dazu, den Abstand von Hindernissen zum Kraftfahrzeug zu ermitteln und den Fahrer bei Annäherung an die Hindernisse zu warnen. Neben der Ultraschall-Einparkhilfe ist das Kraftfahrzeug mit dem System einer Rückfahrkamera ausgestattet. Das System der Rückfahrkamera beinhaltet wenigstens ein Bildsensorsystem, das im Kraftfahrzeug angeordnet ist und zumindest einen Teil des rückwärtigen Fahrraumes des Kraftfahrzeuges erfasst, und eine Anzeigeeinheit zur Bildwiedergabe des erfassten Fahrraumes. Die geometrisch exakte Einblendung von Hilfslinien in das Videobild erfordert eine Kalibrierung des Bildsensorsystems. Diese Kalibrierung umfasst die Bestimmung von intrinsischen Kalibrierparametern, insbesondere die Beschreibung der Abbildung in dem Bildsensorsystem, und/oder von extrinsischen Kalibrierparametern (Parameter der Einbaukalibrierung), welche die Lage des Bildsensorsystems bezüglich des Kraftfahrzeuges bzw. der Fahrbahnebene beschreiben. Für die Darstellung eines Fahrschlauches ist weiterhin eine Auswertung der Lenkwinkelsignale und deren Umrechnung in Bewegungstrajektorien des Kraftfahrzeuges erforderlich. Die Einblendung von Linien im Videobild, welche die Entfernung zu Hindernissen visualisieren, nachfolgend als Entfernungslinien bezeichnet, ermöglichen dem Fahrer die Entfernung zu Hindernissen hinter dem Kraftfahrzeug abzuschätzen. Gleichzeitig erfolgt die Messung von Entfernungen zu dem Hindernis mit den Ultraschallsensoren. Es ist anzustreben, die vom Ultraschallsystem gemessenen Entfernungen und die hieraus an den Fahrer generierten Warnungen konsistent mit den im Videobild visualisierten Entfernungslinien zu halten, da dies dazu beiträgt, dass die Funktion des Gesamtsystems Rückfahrkamera mit Ultraschall-Einparkhilfe für den Fahrer plausibel erscheint. Nachfolgend wird deshalb eine Kreuzkalibrierung zwischen Bildsensorsystem und Ultraschall-Sensoren beschrieben. Die Parameter der Einbaukalibrierung des Systems Rückfahrkamera, die nach Montage des Bildsensorsystems im Kraftfahrzeug zum Teil für jedes Kraftfahrzeug individuell ermittelt werden müssen, sind:

- Der Nickwinkel und/oder der Gierwinkel und/oder der Wankwinkel zwischen Bildsensorsystem und Fahrbahn und/oder zwischen Bildsensorsystem und Fahrachse (Einbauwinkel), und/oder
- Die Höhe des Bildsensorsystems über der Fahrbahnebene, und/oder
- Der Abstand des Bildsensorsystems von der Hinterachse, und/oder
- die Querlage des Bildsensorsystems bezüglich der Kraftfahrzeuglängsebene.

Die letzten beiden oder die letzten drei Kalibrierparameter werden vorzugsweise aus Konstruktionsdaten des Kraftfahrzeuges übernommen. Die exakte Einhaltung der Einbauwinkel ist in der Fertigung oder Reparatur in der notwendigen Genauigkeit schwer erreichbar. Daher wird nachfolgend beschrieben, die Einbauwinkel nach Montage des Bildsensorsystems zu ermitteln. Die Kalibrierung des Ultraschall-Systems im Kraftfahrzeug erfolgt nach Montage der Ultraschall-Sensoren in der Stoßstange mit einem hierfür ausgelegten Kalibrieraufbau in der Fertigung. Anschließend wird nach der Montage des Bildsensorsystems Kalibrierung des Bildsensorsystems mit der nachfolgend beschriebenen Vorrichtung zur Kalibrierung des Bildsensorsystems durchgeführt. Die Vorrichtung zur Kalibrierung eines Bildsensorsystems bestimmt Parameter zur Visualisierung von Entfernungsslinien in einem Videobild eines Systems einer Rückfahrkamera unter Nutzung der Entfernungsmessung der Ultraschall-Einparkhilfe. Weiterhin werden alternativ oder zusätzlich ausgewählte Einbauparameter des Bildsensorsystems der Rückfahrkamera und die Lage der Fahrbahnebene ermittelt. Hierzu wird das Kraftfahrzeug vor einem im wesentlichen senkrecht auf der Fahrbahnebene stehendem Hindernis, beispielsweise einer Hauswand und/oder einem Garagentor positioniert. Die Lage, also Ausrichtung und die Entfernung des Hindernisses zum Kraftfahrzeug, werden von der Ultraschall-Einparkhilfe gemessen. Gleichzeitig wird im Videobild die Unterkante des Hindernisses ermittelt. Aus den gemessenen Daten der Ultraschallsensoren, der Lage der Unterkante des Hindernisses im Videobild und Konstruktionsdaten zur Anbringung der Sensoren im Kraftfahrzeug wird wenigstens ein Kalibrierparameter des Bildsensorsystems bestimmt.

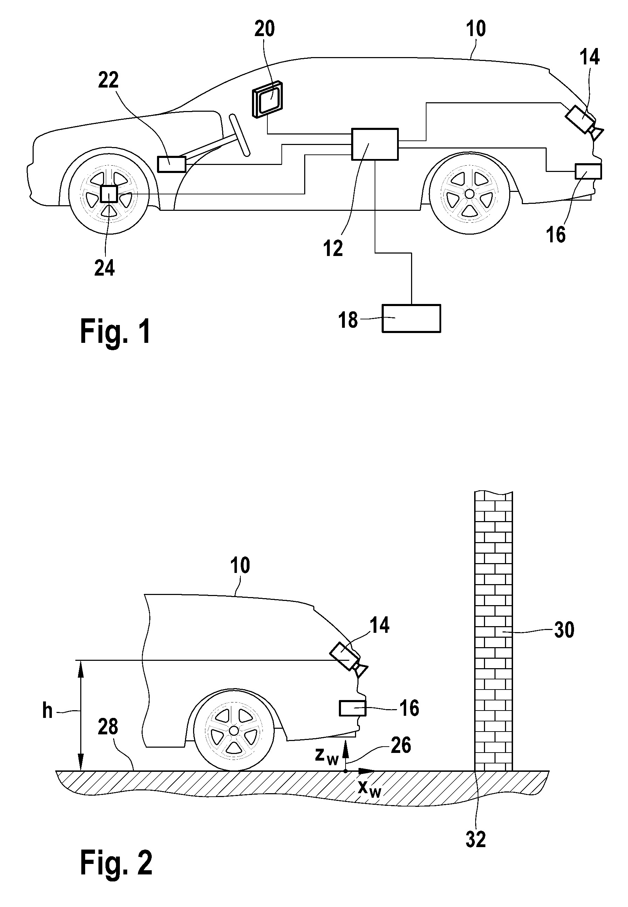

Figur 1 zeigt eine Übersichtszeichnung der Vorrichtung zur Kalibrierung eines Bildsensorsystems 14 in Verbindung mit einem Kraftfahrzeug 10 des bevorzugten Ausführungsbeispiels, bestehend aus einem Steuergerät 12, einem Bildsensorsystem 14 und Ultraschallsensoren 16. Ferner zeigt Figur 1 eine Bedieneinheit 18, eine Anzeigeeinheit 20 zur Darstellung des Videobildes, einen Lenkwinkelsensor 22 und einen Radwinkelsensor 24. Die Signale des Lenkwinkelsensors 22 und Radwinkelsensors 24 werden zur Bestimmung des Fahrschlauches eingesetzt. Das Bildsensorsystem 14, die Ultraschallsensoren 16, die Bedieneinheit 18, die Anzeigeeinheit 20, der Lenkwinkelsensor 22 und der Radwinkelsensor 24 sind über Signalleitungen mit dem Steuergerät 12 verbunden. Die Übertragung der Signale über die Signalleitungen erfolgt elektrisch und/oder optisch und/oder per Funk. Alternativ oder zusätzlich sind die Signalleitungen durch einen Bus, beispielsweise dem CAN-Bus, realisiert. Das Bildsensorsystem 14 ist im bevorzugten Ausführungsbeispiel eine CMOS-Kamera mit Weitwinkeloptik.

Figur 2 zeigt eine Seitenansicht des Kraftfahrzeuges 10 vor einem Hindernis 30 des bevorzugten Ausführungsbeispiels. Das Kraftfahrzeug 10 befmdet sich vor einem ebenen Hindernis 30, das im wesentlichen senkrecht auf der Fahrbahnebene 28 steht. Der Abstand des Kraftfahrzeuges 10 von dem Hindernis 30 beträgt etwa 1 Meter. Die Unterkante 32 des Hindernisses 30 wird im Videobild des Bildsensorsystems 14 gemessen. Ferner zeigt Figur 2 die Höhe h des Bildsensorsystems 14 über der Fahrbahnebene 28 und die beiden Koordinatenachsen $z_w$ und $x_w$ eines Referenzkoordinatensystems, nachfolgend als Weltkoordinatensystem 26 bezeichnet. Im bevorzugten Ausführungsbeispiel erfolgt dies interaktiv durch manuelles Verschieben einer Hilfslinie im Videobild auf der Anzeigeeinheit (Display) mittels Cursor-Tasten. Die Entfernung zum Hindernis 30 wird von den Ultraschallsensoren 16 gemessen. Die Ultraschall-Einparkhilfe befindet sich hierzu in einem speziellen Kalibriermodus. Aus den Bildsignalen des Bildsensorsystems 14, den Signalen der Ultraschallsensoren 16 der Ultraschall-Einparkhilfe, den vorhandenen Daten zur Fahrzeuggeometrie, gegebenenfalls den vorhandenen Daten zur Kraftfahrzeugbewegung in Verbindung mit einem Bewegungsmodell des Kraftfahrzeuges 10 werden die gesuchten Kalibrierparameter im Steuergerät bestimmt und später für die Darstellung von Abstands-Linien bzw. eines Fahrschlauches in der Anzeigeeinheit verwendet.

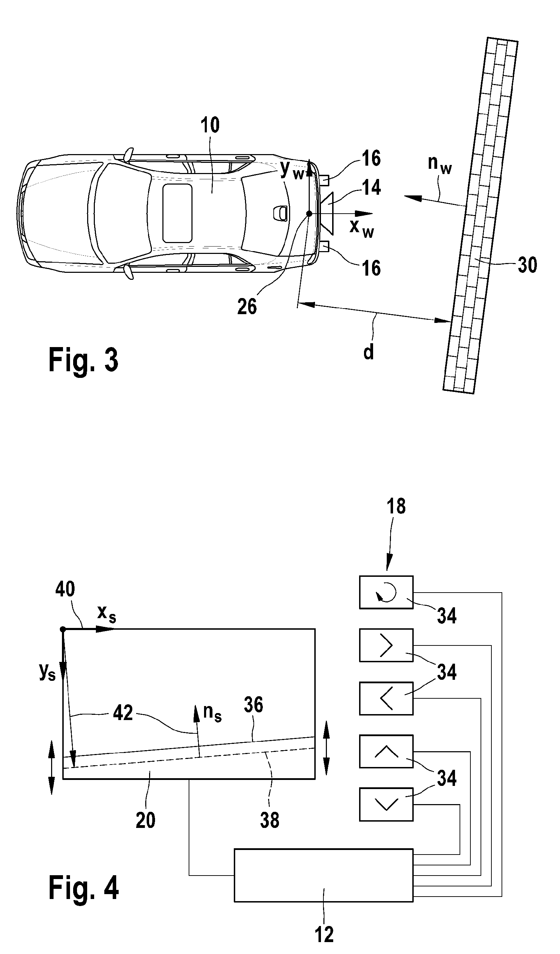

Figur 3 zeigt eine Aufsicht des Kraftfahrzeuges 10 vor einem Hindernis 30 des bevorzugten Ausführungsbeispiels. Neben dem Bildsensorsystem 14 und den beiden Ultraschallsensoren 16 zeigt Figur 3 zwei Koordinatenachsen $y_w$ und $x_w$ des Weltkoordinatensystems 26. Ferner zeigt Figur 3 die Entfernung d des Bildsensorsystems 14 vom Hindernis 30 und den Normalenvektor $n_w$ des Hindernisses 30 in der Fahrbahnebene.

Figur 4 zeigt eine Eingabeeinheit 18 der Vorrichtung zur Kalibrierung eines Bildsensorsystems des bevorzugten Ausführungsbeispiels, bestehend aus fünf Cursor-Tasten 34. Die Cursor-Tasten 34 der Eingabeeinheit 18 sind über Signalleitungen mit dem Steuergerät 12 des Kraftfahrzeuges verbunden. Zwei der Cursor-Tasten 34 dienen zur horizontalen Bewegung der Hilfslinie 38, während zwei weitere Cursor-Tasten 34 zur vertikalen Bewegung der Hilfslinie 38 dienen. Eine Cursor-Taste 34 wird zur Rotation der Hilfslinie 38 eingesetzt. Ferner ist die Anzeigeeinheit 20 über Signalleitungen mit dem Steuergerät 12 verbunden. Die Übertragung der Signale über die Signalleitungen erfolgt elektrisch und/oder optisch und/oder per Funk. Alternativ oder zusätzlich sind die Signalleitungen als Bus, beispielsweise einem CAN-Bus, realisiert. Im bevorzugten Ausführungsbeispiel wird die Bedieneinheit 18 lediglich bei der Fertigung und/oder Reparatur an die Steuereinheit 12 angeschlossen. Die Steuereinheit 12 ist im Kraftfahrzeug installiert und ist im Betrieb des Kraftfahrzeuges Bestandteil der Rückfahrkamerafunktion. Entsprechendes gilt für die Anzeigeeinheit 20, die im regulären Betrieb ebenfalls Bestandteil der Rückfahrkamerafunktion ist. In einer Variante des bevorzugten Ausführungsbeispiels beinhaltet die Eingabeeinheit 18 neben den Cursor-Tasten 34 eine separate Anzeigeeinheit und/oder eine separate Steuereinheit. Ferner zeigt Figur 4 ein Videobild auf der Anzeigeeinheit 20 umfassend ein Bild der Unterkante 36 und eine Hilfslinie 38. Zur Veranschaulichung der Kalibrierung ist ferner das Bildkoordinatensystem 40 mit den zwei Koordinatenachsen $x_s$ und $y_s$, sowie die zwei Geradeparameter $\mathbf{n}_s$ (Normalenvektor) und $d_s$ (Entfernung vom Ursprung des Bildkoordinatensystems) des Bildes der Unterkante 36 des Hindernisses.

Nachfolgend wird anhand der Figuren 2 bis 4 die Kalibrierung des Bildsensorsystems des bevorzugten Ausführungsbeispiels näher ausgeführt. Figur 2 zeigt das Kraftfahrzeug 10 vor dem Hindernis 30 in Seitenansicht und Figur 3 in Aufsicht. In der Fahrbahnebene 28 ist ein Weltkoordinatensystem 26 so definiert, dass die $x_w$-Achse und die $y_w$-Achse des Weltkoordinatensystems 26 in der Fahrbahnebene 28 liegen. Die $x_w$-Achse des Weltkoordinatensystems 26 liegt im bevorzugten Ausführungsbeispiel in der Fahrzeuglängsmittelebene. Das Bildsensorsystem 14 befindet sich in einer Höhe h über der Fahrbahnebene 28. Ferner ist das Bildsensorsystem 14 im bevorzugten Ausführungsbeispiel im Koordinatenursprung des Weltkoordinatensystems 26 angebracht. Die Projektion eines Punktes in der Weltkoordinate $\mathbf{x}_w=(x_w, y_w, z_w)$ in die Bildebene in eine Bildkoordinate $\mathbf{x}_s=(x_s, y_s)$ erfolgt bei einer näherungsweise projektiven Abbildung entsprechend dem Modell Lochkamera über die folgende Gleichung:

$$\lambda \begin{pmatrix} \mathbf{x}_S \\ 1 \end{pmatrix}_S = \lambda \begin{pmatrix} x_S \\ y_S \\ 1 \end{pmatrix} = \begin{pmatrix} c & 0 & x_H \\ 0 & c & y_H \\ 0 & 0 & 1 \end{pmatrix} \begin{pmatrix} r_{11} & r_{12} & r_{13} \\ r_{21} & r_{22} & r_{23} \\ r_{31} & r_{32} & r_{33} \end{pmatrix}^T \left( \begin{pmatrix} x_W \\ y_W \\ z_W \end{pmatrix} - \begin{pmatrix} t_x \\ t_y \\ t_z \end{pmatrix} \right) = \mathbf{K}\mathbf{R}^T(\mathbf{x}_E - \mathbf{t}) \qquad (1)$$

Der Faktor $\lambda$ ist ein Proportionalitätsfaktor, der zur Berechnung der Bildkoordinaten eliminiert werden kann. Die Matrix $\mathbf{K}$ enthält die intrinsischen Kalibrierparameter des Bildsensorsystems, hier c, $x_H$ und $y_H$. Die Rotationsmatrix $\mathbf{R}$ ist von den Lagewinkeln (Nickwinkel, Gierwinkel und Wankwinkel) des Bildsensorsystems bezüglich des Weltkoordinatensystems 26 abhängig. Der Translationsvektor t enthält die Position des Bildsensorsystems im Weltkoordinatensystem 26. Die Abbildung eines Punktes $\mathbf{x}_E=(x_E, y_E)$, der sich in der Fahrbahnebene 28 befindet, in den Bildpunkt $\mathbf{x}_s=(x_s, y_s)$ wird über eine Homographie A beschrieben.

$$\lambda \begin{pmatrix} \mathbf{x}_S \\ 1 \end{pmatrix} = \lambda \begin{pmatrix} x_S \\ y_S \\ 1 \end{pmatrix} = \begin{pmatrix} a_{11} & a_{12} & a_{13} \\ a_{21} & a_{22} & a_{23} \\ a_{31} & a_{32} & a_{33} \end{pmatrix} \begin{pmatrix} x_E \\ y_E \\ 1 \end{pmatrix} = \mathbf{A} \begin{pmatrix} \mathbf{x}_E \\ 1 \end{pmatrix} \qquad (2)$$

Dabei ist $\lambda$, ein Proportionalitätsfaktor. Damit ergeben sich die Bildkoordinaten $x_s$ und $y_s$ zu:

$$x_s = \frac{a_{11}x_E + a_{12}y_E + a_{13}}{a_{31}x_E + a_{32}y_E + a_{33}} \qquad (3)$$

$$y_s = \frac{a_{21}x_E + a_{22}y_E + a_{23}}{a_{31}x_E + a_{32}y_E + a_{33}} \qquad (4)$$

Die Homographie A wird aus der Projektion in Gleichung (1) berechnet mit:

$$A = KR^T - KR^T n \quad n = (0 \; 1 \, / \, h \; 0) \tag{5}$$

Während des Kalibriervorganges wird mittels der zwei Ultraschall-Sensoren 16 die Lage des ebenen Hindernisses 30 im Weltkoordinatensystem 26 bestimmt. Die Messung ergibt einen Normalenvektor $\mathbf{n}_w$ des Hindernisses 30 in der Fahrbahnebene 28 und einen Abstand d entsprechend Figur 3. Hieraus wird eine Geradegleichung für die Lage der Unterkante 32 des Hindernisses 30 in der Fahrbahnebene 28 abgeleitet:

$$g_E{}^T x_E = 0 \tag{6}$$

Mit $\mathbf{g}_E = (n_{wx}, n_{wy}, d)^T$ und $\mathbf{x}_E = (x_E, y_E, 1)^T$
Der Vektor $\mathbf{g}_E$ enthält die Parameter der Gerade der Unterkante 32 des Hindernisses 30 in der Fahrbahnebene 28. Der Monteur oder der Kraftfahrzeugmechaniker misst interaktiv die Lage der Unterkante 32 des Hindernisses 30 im Videobild. Hieraus ergeben sich die Geradenparameter $\mathbf{g}_s$ im Bildkoordinatensystem 40. Die Transformation von Geradeparametern von der Fahrbahn in die Bildebene erfolgt im bevorzugten Ausführungsbeispiel über die Homographie **A:**

$$g_s = A^{-1} g_E \tag{7}$$

In dieser Gleichung sind zur Berechnung der Homographie A die intrinsischen Kalibrierparameter **K,** die Höhe des Bildsensorsystems 14 über der Fahrbahn h, aus den Ultraschall-Messungen die Geradenparameter $\mathbf{g}_E$ und aus den Messungen im Videobild die Geradenparameter $g_\mathbf{s}$ bekannt. Im bevorzugten Ausführungsbeispiel werden zwei unbekannte Einbauwinkel, beispielsweise der Gierwinkel und der Nickwinkel, des Bildsensorsystems 14 aus der Gleichung bestimmt. Ferner wird im bevorzugten Ausführungsbeispiel die Homographie vollständig bestimmt, indem ein weiterer Winkel als bekannt in die Gleichung eingeht, beispielsweise aus der Montage des Bildsensorsystems, und/oder ein weiterer Einbauwinkel wird zusätzlich oder alternativ durch zusätzliche Maßnahmen bestimmt. Die Kenntnis der Homographie **A** ermöglicht mittels Gleichung (7) das korrekte Einzeichnen von Entfernungslinien in das Videobild. Die Unterkante 32 wird im bevorzugten Ausführungsbeispiel von dem Hindernis 30, das ein Kalibrierobjekt darstellt, und der Fahrbahnebene 28 derart gebildet, indem das ebene Kalibrierobjekt auf der Fahrbahnebene 28 im wesentlichen senkrecht aufsteht und damit der Übergang zwischen Kalibrierobjekt und Fahrbahnebene 28 eine Kante bildet.

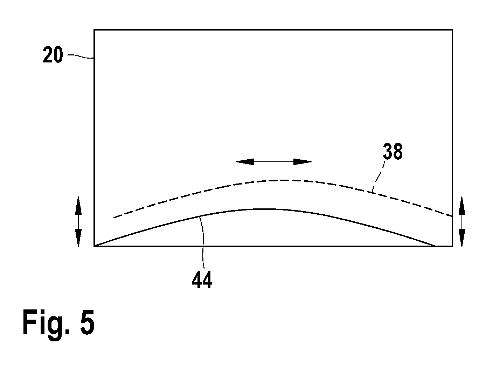

In einer Variante des bevorzugten Ausführungsbeispiels zeigt Figur 5 die Darstellung einer Anzeigeeinheit 20. In dieser Variante ist im Videobild des Bildsensorsystems die Stoßstange und/oder wenigstens ein Bestandteil des Kraftfahrzeuges sichtbar. Die Lage der Stoßstange des Kraftfahrzeuges oder die Lage von wenigstens einem anderen im Bild sichtbaren Bestandteil des Kraftfahrzeuges werden im Kalibriervorgang vom Bediener interaktiv markiert. Dies erfolgt ebenfalls durch das Einblenden von Hilfslinien 38. Figur 5 zeigt neben der Hilfslinie 38 die Kontur 44 des Kraftfahrzeughecks.

Eine weitere Variante des bevorzugten Ausführungsbeispiels sieht alternativ oder zusätzlich vor, dass Vorrichtung derart konfiguriert ist, dass die Vorrichtung das Bildsensorsystem mittels wenigstens einer im wesentlichen horizontalen Kante des wenigstens einen Kalibrierobjektes kalibriert, wobei die horizontale Kante vorzugsweise von dem Bildsensorsystem erfasst wird. In dieser Variante hat das Kalibrierobjekt selbst eine im wesentlichen horizontale Kante. In einer Ausführung ist das Kalibrierobjekt eine Brüstungsmauer mit einer freien oberen Kante, die zur Kalibrierung verwendet wird.

In einer weiteren Variante des bevorzugten Ausführungsbeispiels weist das Hindernis als Kalibrierobjekt, das senkrecht auf der Fahrbahnebene steht, eine Kante auf, die ebenfalls im wesentlichen senkrecht auf der Fahrbahnebene steht. Dies ist je nach Ausführung beispielsweise eine Kante eines Garagentores und/oder eine Hauskante. Diese im wesentlichen senkrechte Kante wird im Videobild interaktiv vom Bediener über eine Hilfslinie markiert. In dieser Variante werden drei Einbauwinkel des Bildsensorsystems bestimmt.

Die Genauigkeit der zu bestimmenden Kalibrierparameter wird in einer weiteren Variante erhöht, indem wenigstens zwei oder mehr Messungen mittels wenigstens eines Ultraschallsensors und/oder wenigstens eines Bildsensorsystems in unterschiedlichen Abständen des Kraftfahrzeuges vom Kalibrierobjekt (Hindernis) durchgeführt werden.

Eine Variante des bevorzugten Ausführungsbeispiels sieht vor, dass das Hindernis als Testfeld ausgeführt ist. Ein Testfeld zeichnet sich dadurch aus, dass wenigstens ein Kalibriermerkmal (Markierung) angebracht ist, wobei wenigstens dessen Höhe über der Fahrbahnebene bekannt ist. Zusätzlich zur Messung wenigstens einer Kante wird die Lage des Kalibriermerkmals im Videobild bestimmt und abhängig davon das Bildsensorsystem kalibriert. Zusätzlich wird in dieser Variante wenigstens ein intrinsischer Kalibrierparameter bestimmt.

In einer weiteren Variante des bevorzugten Ausführungsbeispiels ist das Bildsensorsystem alternativ oder zusätzlich eine CCD-Kamera. Eine weitere Variante sieht vor, das Bildsensorsystem aus wenigstens zwei CCD-Kameras und/oder CMOS-Kameras zu bilden, insbesondere ist das Bildsensorsystem eine Stereokamera mit zwei Kameras, die im wesentlichen dieselbe Szene aufnehmen.

Eine weitere Variante des bevorzugten Ausführungsbeispiels verwendet statt zwei Ultraschallsensoren, einen oder mehr als zwei Ultraschallsensoren, die vorzugsweise symmetrisch in der Stoßstange des Kraftfahrzeuges angeordnet sind.

Die Vorrichtung ist nicht begrenzt auf wenigstens einen Ultraschallsensor, vielmehr ist die Vorrichtung in Verbindung mit an dem Kraftfahrzeug angebrachten Lagesensoren einsetzbar, welche kontaktlos die Ausrichtung und/oder Entfernung eines Kalibrierobjektes bestimmen. Als Lagesensoren werden in einer weiteren Variante des bevorzugten Ausführungsbeispiels Radarsensoren und/oder LIDAR-Sensoren eingesetzt, wobei die Vorrichtung derart konfiguriert ist, dass die Vorrichtung das Bildsensorsystem mittels eines Kalibrierobjektes in Abhängigkeit von Bildsignalen des Bildsensorsystems und in Abhängigkeit von Signalen des wenigstens eines Lagesensors kalibriert.


**Patentansprüche**

1. Vorrichtung zur Kalibrierung wenigstens eines Bildsensorsystems, wobei die Vorrichtung derart konfiguriert ist, dass die Vorrichtung das in einem Kraftfahrzeug angeordnete und zumindest einen Teil des rückwärtigen Fahrraumes des Kraftfahrzeuges erfassende Bildsensorsystem kalibriert, **dadurch gekennzeichnet, dass** die Vorrichtung derart konfiguriert ist, dass die Vorrichtung das Bildsensorsystem mittels eines Kalibrierobjektes in Abhängigkeit von Bildsignalen des Bildsensorsystems und in Abhängigkeit von Signalen wenigstens eines Lagesensors, insbesondere wenigstens eines Ultraschallsensors, kalibriert.

2. Verfahren nach Anspruch 1, **dadurch gekennzeichnet, dass** die Vorrichtung derart konfiguriert ist, dass die Vorrichtung das Bildsensorsystem mittels wenigstens einer von wenigstens einem Kalibrierobjekt und einer Fahrbahnebene gebildeten Kante kalibriert, wobei die Kante vorzugsweise von dem Bildsensorsystem erfasst wird.

3. Verfahren nach einem der vorhergehenden Ansprüche, **dadurch gekennzeichnet, dass** die Vorrichtung derart konfiguriert ist, dass die Vorrichtung das Bildsensorsystem mittels wenigstens einer im wesentlichen horizontalen Kante wenigstens eines Kalibrierobjektes kalibriert, wobei die horizontale Kante vorzugsweise von dem Bildsensorsystem erfasst wird.

4. Vorrichtung nach einem der vorhergehenden Ansprüche, **dadurch gekennzeichnet, dass** das Kalibrierobjekt flächenhaft ausgeführt ist und/oder das Kalibrierobjekt im wesentlichen senkrecht auf der Fahrbahnebene ausgerichtet ist.

5. Vorrichtung nach einem der vorhergehenden Ansprüche, **dadurch gekennzeichnet, dass** das Kalibrierobjekt wenigstens eine Hauswand und/oder eine Tür und/oder ein Testfeld ist.

6. Vorrichtung nach einem der Ansprüche 2 bis 5, **dadurch gekennzeichnet, dass** die Vorrichtung derart konfiguriert ist, dass die Vorrichtung das Bildsensorsystem mittels wenigstens einer weiteren Kante des Kalibrierobjektes, insbesondere wenigstens einer im wesentlichen vertikal angeordneten Kante des Kalibrierobjektes, und/oder mittels wenigstens eines Kalibriermerkmals auf dem Kalibrierobjekt kalibriert.

7. Vorrichtung nach einem der vorhergehenden Ansprüche, **dadurch gekennzeichnet, dass** die Vorrichtung derart konfiguriert ist, dass die Vorrichtung das Bildsensorsystem in Abhängigkeit von Bildsignalen von wenigstens einem Bestandteil des Kraftfahrzeuges, beispielsweise der Stoßstange, kalibriert.

8. Vorrichtung nach einem der Ansprüche 2 bis 7, **dadurch gekennzeichnet, dass** die Vorrichtung wenigstens eine Eingabeeinheit umfasst, wobei die Eingabeeinheit derart ausgestaltet ist, dass eine Kennzeichnung wenigstens einer Kante und/oder wenigstens eines Kalibriermerkmals und/oder wenigstens eines Bestandteils des Kraftfahrzeuges in den Bildsignalen des Bildsensorsystems durchführbar ist.

9. Vorrichtung nach einem der vorhergehenden Ansprüche, **dadurch gekennzeichnet, dass** die Signale des Ultraschallsensors die Entfernung des Kalibrierobjektes bezüglich eines Referenzkoordinatensystems und/oder die Ausrichtung des Kalibrierobjektes bezüglich eines Referenzkoordinatensystems repräsentieren.

**10.** Vorrichtung nach einem der vorhergehenden Ansprüche, **dadurch gekennzeichnet, dass** der Ultraschallsensor derart am Kraftfahrzeug angeordnet ist, dass der Ultraschallsensor zumindest ein Teil des rückwärtigen Fahrraumes des Kraftfahrzeuges erfasst.

**Fig. 1**

**Fig. 2**

Fig. 3

Fig. 4

**Fig. 5**

**Europäisches Patentamt**

**EUROPÄISCHER RECHERCHENBERICHT**

Nummer der Anmeldung

EP 04 10 5591

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| P,X | EP 1 403 139 A (AISIN SEIKI KABUSHIKI KAISHA) 31. März 2004 (2004-03-31) * Seite 12, Zeilen 14-16; Abbildungen 1,2 * ----- | 1 | G06T7/00 B60Q1/48 |
| A | DATABASE INSPEC [Online] THE INSTITUTION OF ELECTRICAL ENGINEERS, STEVENAGE, GB; 2003, SHNEIER M ET AL: "A repository of sensor data for autonomous driving research" XP002326181 Database accession no. 8074273 * Zusammenfassung; Abbildungen 1,2 * & UNMANNED GROUND VEHICLE TECHNOLOGY V 22-23 APRIL 2003 ORLANDO, FL, USA, Bd. 5083, Nr. 1, 23. April 2003 (2003-04-23), Seiten 390-394, Proceedings of the SPIE - The International Society for Optical Engineering SPIE-Int. Soc. Opt. Eng USA ISSN: 0277-786X * Seite 391, rechte Spalte, Absatz 3 - Seite 392, linke Spalte, Absatz 4; Abbildung 2 * ----- | 5,6 | |
| Y | DE 196 03 267 A1 (ROBERT BOSCH GMBH, 70469 STUTTGART, DE) 31. Juli 1997 (1997-07-31) * Spalte 3, Zeile 12 - Zeile 34 * ----- -/-- | 1-4 | |

RECHERCHIERTE SACHGEBIETE (Int.Cl.7)

G06T
B60Q

Der vorliegende Recherchenbericht wurde für alle Patentansprüche erstellt

| Recherchenort | Abschlußdatum der Recherche | Prüfer |
|---|---|---|
| Den Haag | 4. Mai 2005 | Chateau, J-P |

EPO FORM 1503 03.82 (P04C03)

**EP 1 550 983 A1**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | DATABASE INSPEC [Online] THE INSTITUTION OF ELECTRICAL ENGINEERS, STEVENAGE, GB; 1999, ERNST S ET AL: "Camera calibration for lane and obstacle detection" XP002327336 Database accession no. 6529792 * Zusammenfassung * * Seite 357, linke Spalte, Absatz 3 - Seite 358, rechte Spalte, Zeile 9; Abbildung 3 * & PROCEEDINGS OF 1999 INTELLIGENT TRANSPORTATION SYSTEMS CONFERENCE 5-8 OCT. 1999 TOKYO, JAPAN, 1999, Seiten 356-361, Proceedings 199 IEEE/IEEJ/JSAI International Conference on Intelligent Transportation Systems (Cat. No.99TH8383) IEEE Piscataway, NJ, USA ISBN: 0-7803-4975-X ----- | 1-4 | |
| | | | **RECHERCHIERTE SACHGEBIETE (Int.Cl.7)** |

Der vorliegende Recherchenbericht wurde für alle Patentansprüche erstellt

| Recherchenort | Abschlußdatum der Recherche | Prüfer |
|---|---|---|
| Den Haag | 4. Mai 2005 | Chateau, J-P |

**ANHANG ZUM EUROPÄISCHEN RECHERCHENBERICHT**
**ÜBER DIE EUROPÄISCHE PATENTANMELDUNG NR.**

EP 04 10 5591

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-05-2005

| Im Recherchenbericht angeführtes Patentdokument | | Datum der Veröffentlichung | Mitglied(er) der Patentfamilie | | Datum der Veröffentlichung |
|---|---|---|---|---|---|
| EP 1403139 | A | 31-03-2004 | JP | 2004120662 A | 15-04-2004 |
| | | | EP | 1403139 A1 | 31-03-2004 |
| DE 19603267 | A1 | 31-07-1997 | WO | 9728457 A1 | 07-08-1997 |
| | | | DE | 59604472 D1 | 23-03-2000 |
| | | | EP | 0877951 A1 | 18-11-1998 |
| | | | ES | 2143257 T3 | 01-05-2000 |
| | | | JP | 2000504418 T | 11-04-2000 |

EPO FORM P0461

Für nähere Einzelheiten zu diesem Anhang : siehe Amtsblatt des Europäischen Patentamts, Nr.12/82